Europäisches Patentamt

(19) European Patent Office

Office européen des brevets

(11) Publication number: **0 285 318 B1**

## (12) EUROPEAN PATENT SPECIFICATION

(45) Date of publication of patent specification:
**13.11.91 Bulletin 91/46**

(21) Application number: **88302557.9**

(22) Date of filing: **23.03.88**

(51) Int. Cl.⁵: **F28F 19/00, C23F 11/00,**
**F24D 19/00, C02F 1/68,**
**F28F 13/08, C23F 11/18,**
**C02F 1/50**

(54) Inhibiting corrosion in aqueous heat transfer apparatus.

(30) Priority: **24.03.87 GB 8707004**
**22.05.87 GB 8712198**

(43) Date of publication of application:
**05.10.88 Bulletin 88/40**

(45) Publication of the grant of the patent:
**13.11.91 Bulletin 91/46**

(84) Designated Contracting States:
**BE DE ES FR GB IT NL SE**

(56) References cited:
**EP-A- 0 083 571**
**EP-A- 0 142 038**
**EP-A- 0 242 053**
**BE-A- 504 692**
**DE-A- 2 649 000**
**GB-A- 382 212**

(56) References cited:
**GB-A- 691 578**
**US-A- 3 199 665**
**US-A- 4 040 515**
**US-A- 4 333 516**

(73) Proprietor: **ALCAN INTERNATIONAL LIMITED**
**1188 Sherbrooke Street West**
**Montreal Quebec H3A 3G2 (CA)**

(72) Inventor: **Gray, Alan**
**7 Mortens Wood**
**Amersham Buckinghamshire (GB)**
Inventor: **Arch, Alfred John**
**19 Glebe Road**
**Greensted Ongar essex (GB)**

(74) Representative: **Pennant, Pyers et al**
**Stevens, Hewlett & Perkins 1 Serjeants' Inn**
**Fleet Street**
**London EC4Y 1LL (GB)**

## Description

This invention relates to an aqueous heat transfer apparatus e.g. in which metal surfaces are exposed to circulating water and which contains a multi-component water treatment system. It is of particular interest in connection with the operation of central heating systems employing hot water radiators made of aluminium. As is well known, corrosion of metals occurs in such systems, due to two main causes. The first is oxidic corrosion resulting from oxidizing species carried by the circulating water. The second is galvanic corrosion resulting from the electrical potential existing between two different metals or between two different conditions of the same metal. To mitigate these problems, it is standard practice to incorporate corrosion inhibitors in circulating water systems at the time they are commissioned.

In central heating installations it is common practice to drain down the system, following initial firing to test for leaks, to remove any residual flux or other contaminant collected during installation. This draining down can remove corrosion inhibitor, and hence remove corrosion protection, along with the circulating water. It is known that low concentrations of some proprietary inhibitors can actually promote corrosion.

That problem might be solved by the use of a delay-release capsule, designed to release corrosion inhibitor only after immersion in water at elevated temperature for a significant length of time. However, that expedient would not provide effective corrosion protection if, as is often the case when central heating systems are installed during the summer months, the system was simply filled with cold water and not immediately fired up to its normal operating temperature.

These problems could be avoided by repeated additions of corrosion inhibitor to the circulating water system ; but such additions would be expensive, inconvenient and difficult to monitor. What is needed is a means of adding corrosion inhibitor at one time which will provide corrosion protection under any of the various different installation procedures commonly used. This invention is based on the realisation that such means can only be provided by two or more components adapted to release corrosion inhibitor or other water treatment material under different conditions.

GB-A-691578 describes a method for preventing the corrosion of liquid-containing metal apparatus such as cooling radiators by means of the successive release of corrosion inhibitor from a series of dispensers. Corrosive conditions in the liquid consecutively corrode an exposed metal wall of each dispenser to release corrosion inhibitor.

US-A-4333516 discloses a similar device for the successive release of portions of corrosion inhibitor into a coolant system by corrosion of the metal surface of one container to release inhibitor and expose another container to the coolant.

DE-A-2649000 discloses an apparatus for the gradual release of chemicals into a fluid. The release of chemicals is dependent upon the dissolution of the contents of the capsule. As the contents dissolve, a window is released in order to allow adjacent undissolved contents to escape.

EP-A-0142038 describes a device for inhibiting corrosion in a vehicle cooling system. The device includes a water soluble glass which gradually dissolves to release corrosion inhibiting anions from the glass matrix.

EP-A-242053, published 21 October 1987, describes a dispenser for use, e.g. as a rumen bolus, comprising containers with closures held in place by controlled release glass members. The members dissolve slowly in water so as to release materials from the containers at different times.

The invention thus provides in one aspect aqueous heat transfer apparatus, which apparatus contains a multi-component water treatment system including at least a first component containing a water treatment material closed on at least one face by a first controlled release glass adapted to release a water treatment material in a relatively short time on exposure to water at a relatively low temperature and a second component containing a water treatment material closed on at least one face by a second controlled release glass adapted to release a water treatment material in a relatively long time on exposure to water at a relatively higher temperature. As noted above, the invention is applicable to central heating systems in which the water treatment system is contained in a (or each) hot water radiator.

Preferably the water treatment system is a corrosion protection system including first and second components adapted to release corrosion inhibitor on exposure to water.

The release glasses, which were developed by STC Technology Limited and are marketed by Chance Pilkington Ltd., consist of an open framework of the glass-forming oxide linked, in the case of $P_2O_5$, by P-O-P bonds extending throughout the structure, with the metal ions in the interstices. When the glass is contacted by water or other aqueous medium, a chemical reaction at the glass-water interface breaks the P-O-P bonds and phosphate ions are released into the solution. Any accompanying metal ions are released at the same time. The rate of dissolution is determined by the strength of the bonds, and glasses are formulated to dissolve at any desired controlled rate in water of specified pH and temperature. Controlled release glasses dissolve at a constant rate (with zero-order kinetics) since a new surface is continuously being formed, and leaves no residue.

The corrosion inhibitor can either be dispersed within the controlled release glass, in which case it is gradually released into the circulating water as the glass dissolves ; or in a closed container formed of the glass or having a panel of the glass, in which case it is released as a pulse at the time the glass has completely dissolved.

For example, there may be provided a multiple-acting device or capsule comprising corrosion inhibitor contained in at least two compartments incorporating different controlled release glasses. Alternatively, the components can be made separately and inserted separately, but at the same time, into a hot water radiator or some other part of the system. It is of course possible to use more than two components, though this is likely to be valuable only in rather special circumstances.

The term aqueous is intended to cover aqueous-based systems that include non-aqueous components, for example anti-freeze. The term heat transfer apparatus includes circulating water systems such as solar heating panels, air-conditioning systems, heating systems including heat pumps and particularly central heating systems employing hot water radiators. The invention is valuable where ever such apparatus includes two or more different metals (or the same metal in two or more different states) in contact with circulating water, particularly when one of the metals is aluminium. The term aluminium is used herein to cover the pure metal and its alloys, such as the Al-Si alloys used for casting the Al-Mg-Si alloys used for extrusion, and the Al-Mg alloys used in sheet form.

When incorporated in a radiator, the device may be inserted during the final stages of manufacture and fixed at a suitable location.

The corrosion inhibitors used may be conventional. Examples of suitable corrosion inhibitors are sodium mercaptobenzthiazole (smbt) and benzotriazole both of which are copper passivators ; filming amines such as alkyl propylene amines for passivating aluminium ; finely divided magnetite, also for passivating aluminium by incorporation in the bayerite/pseudo boehmite layer that forms on the metal surface ; molybdates, phosphates and nitrates for passivation of steel. Mixtures of corrosion inhibitors may be used where appropriate. The corrosion inhibitors intended to be released by the first and second components of the system may be the same or different. Advantage may be gained by supplying one corrosion inhibitor for rapid release in cold water conditions and another for delayed release in hot water conditions. Other water treatment agents, such as biocides (e.g. formaldehyde) and sequestrents (e.g. boroheptonate) may be included, either in admixture with the corrosion inhibitors, or separately for independent release.

The amounts of corrosion inhibitors used may be conventional. For example, smbt may be used at a level of 0.02-1.0 grams per litre of water in the heat transfer apparatus. However, the fact that two (or more) different supplies of corrosion inhibitor are provided may make it possible in some circumstances to provide a smaller concentration of each.

A corrosion protection system may comprise a capsule according to the features of claim 5. Such a corrosion protection system should be effective to protect a central heating or other installation from corrosion following any filling/firing/draining installation procedure.

In use, the capsule is placed in a passage through which water flows so that the material within the two compartments is released after a period of time as water flows along the passage. Typically, the capsule is fitted within a connecting pipe, or within the radiator itself. The latter is particularly preferred since the capsule can be fitted during manufacture of the radiator and thus cannot easily be removed or tampered with during installation. Furthermore, the presence of the capsule can be used to improve the water flow characteristics in certain styles of radiator, as will be explained below.

Means are provided for securely locating the capsule within its passage so that it is not subject to movement during water flow. Such means may comprise gripping means such as protruding lugs which grip the walls of the passage sufficiently tightly to prevent movement in use. In an embodiment of the invention the gripping means comprises protruding strippable lugs made of plastics material which are distorted or sheared in an inwards direction as the capsule is pushed into the passage during fitting such as to provide a secure friction fit in use. In case of movement in use, a preferred embodiment of the capsule incorporates spacer means protruding from the main body of the container in the general direction of the passage, said spacer means being positioned so as to prevent the main body of the container moving to a position flat against a restriction or similar variation in the passage which might otherwise cause the capsule to block the flow of water.

The capsule may be made from any material which is thermally and dimensionally stable at the temperatures operating in the circulatory system. An example is an acetal copolymer such as KEMATAL. A typical method of manufacture would be by way of injection moulding.

In order that the invention may be better understood an embodiment thereof will now be described with reference to the accompanying drawings in which :

Figures 1, 2 and 3 are a perspective view, plan view and an end elevation respectively of a two-compartment capsule according to the invention;

Figure 4 is a perspective view of a radiator to illustrate the typical positioning of the capsule within the radiator ; and

Figure 5 is a plan view corresponding to Figure 2 but of a different capsule according to the invention.

The capsule comprises an injection moulded body 1 of plastics material such as an acetal copolymer. The body defines a container having two compartments 2, 3 separated by an integral wall 4. Each compartment has a bottom and sidewalls, and an open top. A shoulder 5 is formed around the top edge to locate a respective lid (not shown) for each compartment. The compartments are filled with an appropriate treatment agent, assumed to be a corrosion inhibiting material (not shown) and the lids bonded or otherwise attached in place so forming two sealed cavities in which the corrosion inhibiting material is located.

The lids are made from controlled release glass which has the property of gradually dissolving in water. One of the lids is made of a glass which dissolves relatively rapidly (e.g. up to 48 hours) in cold water — i.e. water at ambient temperature — while the other lid dissolves relatively rapidly (e.g. 2 to 50 days) in hot water (greater than 30°C) but does not dissolve in cold water or does so to a negligible degree. Thus, when the capsule is immersed in water, one lid is arranged to dissolve quite quickly to thus release the contents of its compartment and give early protection to the circulatory system during the initial flushing stage which is (or should be) carried out during commissioning of the system. After flushing, the system is refilled and the second lid dissolves, eventually releasing the contents of its compartment and providing long-lasting protection in the system.

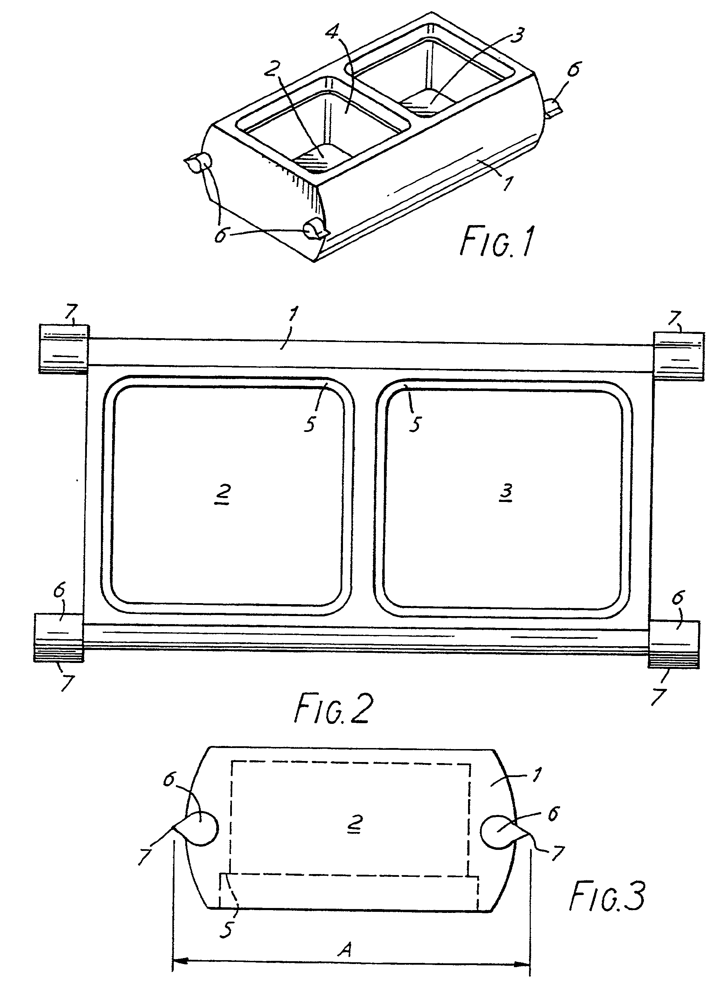

The capsule is inserted into a water-carrying part of the system, and is lodged in place by means of four lugs 6 which bear against and grip the inside surface of the passageway in which the capsule is situated. These lugs, which in the preferred embodiment are formed integrally with body 1, protrude both radially outwardly from the major axis of the body (Figure 3), but also outwardly in a direction parallel to that axis (Figure 2). The radially outward-most portion of the lug is brought to an edge 7, and the distance A between the oppositely disposed edges 7 is such as to be slightly larger than the expected passage diameter so that the lug tends to strip and bend inwards as it is pushed into the passage to provide a tight grip without distorting the main part of the capsule body.

Should the capsule ever become dislodged within its passage, there is a danger that it might move towards and block a narrowed portion of passageway. To prevent this, the lugs 6 protrude axially so that they, rather than the main body of the capsule will, in these circumstances, abut the shoulder defining the narrowed portion, thus ensuring a continued, if slightly restricted, passage for water.

The capsule is orientated within its passageway such that the water flow is in the plane of the major axis of the capsule. This facilitates discharge of the contents, once the glass has dissolved, due to the impingement of the flowing water on the exposed surface of the compacted material within the compartment. Although the compartments are shown as having a bottom integral with the body 1, it will be clear that the compartments could have neither bottom nor top, in which case the controlled release glass lids are used both top and bottom.

The lids could also be placed on the ends of the capsule — i.e. facing the direction of flow of the advancing or retreating water. In such a case, the partition between the two compartments could be made of controlled release glass having a relatively slow release rate so that, eventually, a complete flow through from one end of the capsule to the other is achieved, and good flushing of the treatment agent is ensured.

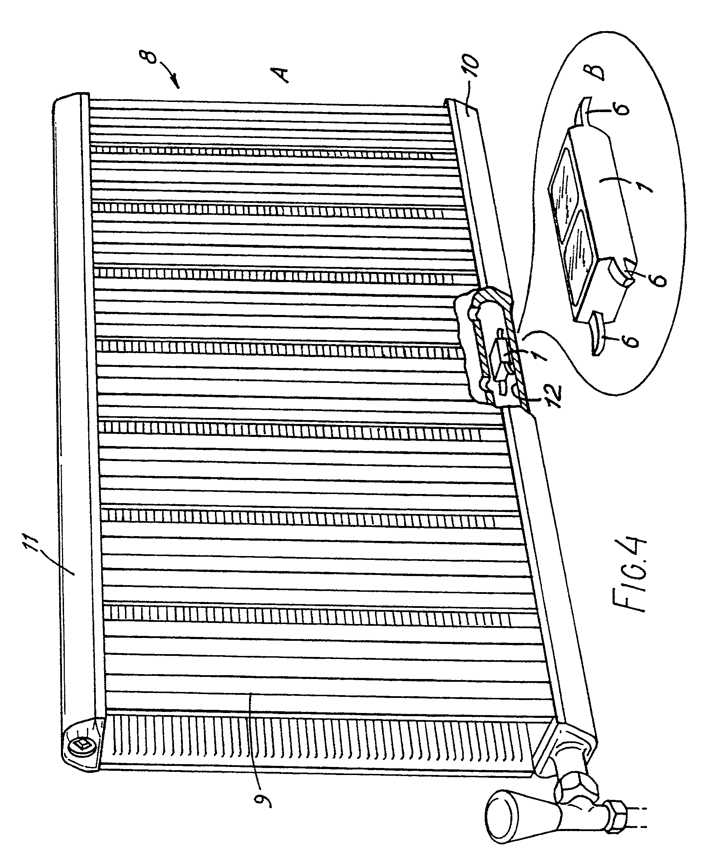

By way of example, Figure 4 shows diagrammatically how the treatment capsule of the invention can be fitted within a central heating radiator, shown under reference 8. The radiator shown is of the type incorporating horizontal upper and lower header tubes 11, 10 with vertical finned tubes 9 extending between the two. The capsule is fitted in the lower header 10 at a position such as to tend to direct water flow up the leftmost finned tubes, as well as straight on, along the header. Thus water flow throughout the radiator is improved and the heat output likewise improved. This type of radiator is in fact intended to be connected so that the water input and output connections are not at the same level. However, in conventional plumbing practice, both radiator connections are made at the bottom and with this type of radiator such a connection can lead to poor performance because the easiest route for water flow is straight along the bottom header. By acting as a "baffle" within the bottom header tube, the flow of water through the finned tubes 9 is encouraged, thus improving the performance of the radiator. With the capsule in the position shown, flow rates along the bottom header can be reduced by as much as 60%.

Figure 4 further shows at (B) a modified form of capsule in which the lugs 6 protrude from the end surfaces of the capsule in a curved manner both axially and radially. Such lugs are bent inwards as the capsule is inserted into the header and firmly grip the inside surface 12 to prevent movement. Other similar configurations will be apparent to those skilled in the art.

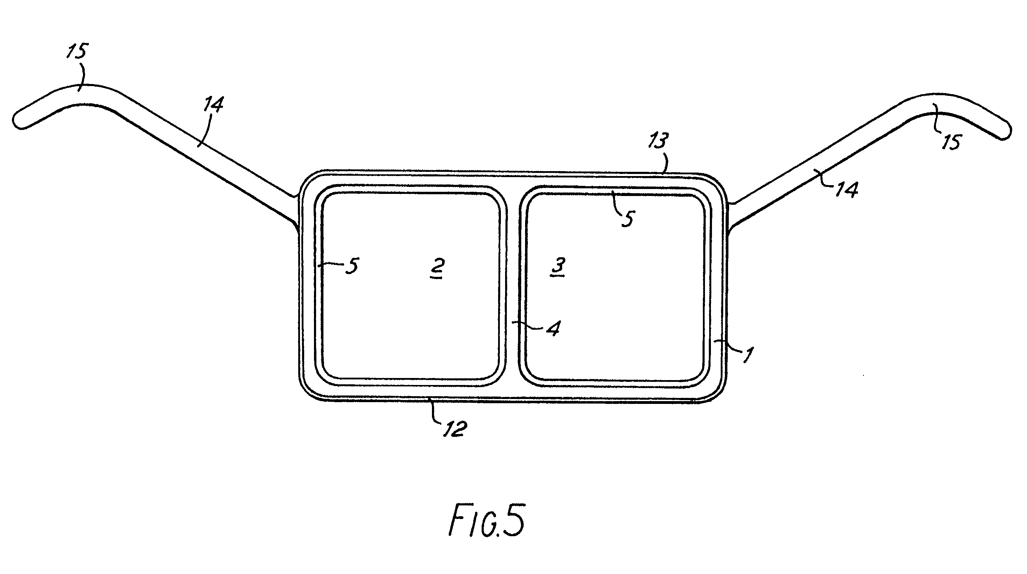

Figure 5 shows a different capsule comprising a body 1 which defines a container having two compartments 2, 3 separated by a wall 4. Each compartment has a bottom and sidewalls, and an open top. A shoulder 5 is formed around the top edge to locate a respective lid (not shown) for each compartment. The side walls 12, 13 of the body are flat, rather than convex as in Figures 1 to 3.

The capsule includes two arms 14 which protrude from the end walls of the container in a direction making an angle of 30° with its longitudinal axis. Towards their outer ends, the arms are curved inwards at 15 towards the longitudinal axis. The arms 14 are made somewhat flexible.

The capsule is designed to be a friction fit in a pipe with the curved portions 15 of the arm and the side wall 12 contacting opposite surfaces of the pipe.

EXAMPLE

An injection moulded KEMETAL (trade mark of Celanese Corp) box shaped capsule, as illustrated in Figure 5 and measuring 31 mm long by 20 mm wide by 10 mm deep adapted to fit inside a header pipe of a domestic radiator, was used in these tests. The capsule contained two separate compartments each sealed by a lid of controlled release glass. The glass sealing the first compartment was chosen to dissolve relatively rapidly in water at room temperature whereas the glass sealing the second compartment required a longer time and high temperature to dissolve. Each compartment contained a pellet of inhibitor weighing 1.40 g made by compressing a solid mixture containing 70% Sodium Mercaptobenzthiazole 15% Magnetite and 15% Sodium lauryl sulphate.

When the capsules were placed in water at 25 ± 2°C the contents of the first compartment were released after 7 to 15 hours. The water was then heated to 45 ± 2°C and held at temperature until the contents of the second compartment were released. This occurred after 160 to 210 hours.

## Claims

1. Aqueous heat transfer apparatus, which apparatus contains a multi-component water treatment system characterised in that said system includes at least a first component containing a water treatment material closed on at least one face by a first controlled release glass adapted to release a water treatment material in a relatively short time on exposure to water at a relatively low temperature and a second component containing a water treatment material closed on at least one face by a second controlled release glass adapted to release a water treatment material in a relatively long time on exposure to water at a relatively higher temperature.

2. Apparatus as claimed in claim 1, wherein the apparatus is a hot water radiator in a central heating system.

3. Apparatus as claimed in claim 1 or claim 2, wherein the water treatment system contains a corrosion inhibitor in the first and second components.

4. Apparatus as claimed in claims 1 to 3, wherein the first component and second component are incorporated into a single device and form compartments thereof.

5. A capsule (1) comprising a container of at least two separate compartments (2, 3), each said compartment (2, 3) having at least one surface open to the exterior, each said surface being covered by a cover, and retaining means for retaining each cover in position to form a sealed compartment, each said cover and/or each said retaining means being formed of a controlled release glass, characterised in that the controlled release glass of at least one of said covers and/or said retaining means is made of a glass which dissolves in water at a temperature not exceeding 30°C in a time not greater than 48 hours and the remainder of said covers and/or said retaining means is or are made of a glass which dissolves in water within 2 to 50 days at a temperature above 30°C.

6. A capsule (1) as claimed in claim 5 for the treatment of water in an aqueous heat transfer apparatus, said capsule (1) having locating means (6, 14) attached to the container for securely locating the capsule (1) within a passage forming part of the heat transfer apparatus, wherein each cover is formed of controlled release glass and each retaining means is sealing means for sealingly attaching the cover to its respective compartment.

7. A capsule (1) as claimed in claim 6, wherein said locating means comprises at least one arm (14) attached to the container and extending away therefrom to grip the inside surface of the passage within which the capsule is located.

8. A capsule (1) as claimed in any one of claims 5 to 7, wherein the container is generally rectangular in shape, being longer in the direction of the axis of a passage in which it is intended to be placed, and has end walls respectively facing the direction of oncoming and retreating water flow within said passage, said container being further provided with spacer means protruding from at least one of said end walls for ensuring the spacing of that end wall from irregularities in the passage.

9. A capsule (1) as claimed in claim 7 or claim 8, wherein said arm (14) extends away from the container in a direction such as to protrude from an end wall to thus act both as a locating means and as a spacer means.

10. A capsule (1) as claimed in any one of claims 5 to 9, wherein the container is made from a material which is thermally and dimensionally stable at the expected operating temperature and such as will remain in the passage after the water treatment material has been dispersed to continue to affect water flow by acting as a baffle within the passage.

## Patentansprüche

1. Wässrige Wärmeübertragungsvorrichtung, die ein verschiedene Teile enthaltendes Wasserbehandlungssystem aufweist, dadurch **gekennzeichnet**, dass das System mindestens einen ersten Teil umfasst, der ein Wasserbehandlungsmaterial enthält und an mindestens einer Seite durch ein erstes Glas mit gesteuerter Freigabe geschlossen ist, das ein Wasserbehandlungsmaterial in verhältnismässig kurzer Zeitspanne abgeben kann, wenn es einem Wasser mit verhältnismässig niedriger Temperatur ausgesetzt ist, und einen zweiten Teil, der ein Wasserbehandlungsmaterial enthält und an mindestens einer Seite durch ein zweites Glas mit gesteuerter Freigabe abgeschlossen ist, das ein Wasserbehandlungsmaterial in einer relativ langen Zeitspanne abgeben kann, wenn es Wasser mit verhältnismässig hoher Temperatur ausgesetzt ist.

2. Vorrichtung nach Anspruch 1, dadurch **gekennzeichnet**, dass die Wärmeübertragungsvorrichtung ein Heisswasserradiator in einem Zentralheizungssystem ist.

3. Vorrichtung nach Anspruch 1 oder 2, dadurch **gekennzeichnet**, dass das Wasserbehandlungssystem im ersten und zweiten Teil einen Korrosionsinhibitor enthält.

4. Vorrichtung nach den Ansprüchen 1 bis 3, dadurch **gekennzeichnet**, dass der erste Teil und der zweite Teil in einer einzigen Anordnung vorliegen und Kammern derselben bilden.

5. Kapsel (1), die einen Behälter mit mindestens zwei getrennten Kammern (2, 3) umfasst, jede der Kammern (2, 3) mindestens eine nach aussen offene Fläche umfasst, jede dieser Flächen von einer Abdeckung bedeckt ist, und eine Haltevorrichtung jede Abdeckung in einer Lage hält, um eine verschlossene Kammer zu bilden, und jede Abdeckung und-/oder jede Haltevorrichtung aus einem Glas mit gesteuerter Freigabe besteht, dadurch **gekennzeichnet**, dass das Glas mit gesteuerter Freigabe an zumindest einer der Abdeckungen und/oder der Haltevorrichtungen aus einem Glas besteht, das sich in Wasser bei einer 30°C nicht überschreitenden Temperatur in einer Zeispanne auflöst, die nicht grösser als 48 Stunden ist, und dass der Rest der Abdeckungen und/oder der Haltevorrichtungen aus einem Glas besteht, das sich in Wasser bei einer Temperatur oberhalb 30°C innerhalb von 2 bis 50 Tagen auflöst.

6. Kapsel (1) nach Anspruch 5 für die Behandlung von Wasser in einer wässrigen Wärmeübertragungsvorrichtung, die Kapsel (1) Positioniereinrichtungen (6, 14) aufweist, die am Behälter angebracht sind, um die Kapsel (1) sicher innerhalb eines Durchtrittsweges zu positionieren, der einen Teil der Wärmeübertragungsvorrichtung bildet, dadurch **gekennzeichnet**, dass jede Abdeckung aus Glas mit gesteuerter Freigabe gebildet wird, und jede Haltevorrichtung ein Dichtungsmittel ist, um die Abdeckung dichtend am jeweiligen Teil zu befestigten.

7. Kapsel (1) nach Anspruch 6, dadurch **gekenn-**

**zeichnet**, dass die Positioniereinrichtung mindestens einen am Behälter befestigten Arm (14) umfasst, der sich vom Behälter wegerstreckt, um die Innenfläche des Durchtrittsweges zu erfassen, innerhalb dessen die Kapsel angeordnet ist.

8. Kapsel (1) nach irgendeinem der Ansprüche 5 bis 7, dadurch **gekennzeichnet**, dass der Behälter im wesentlichen rechteckförmig ausgebildet ist, seine längere Abmessung in Achsrichtung eines Durchtrittsweges liegt, in dem der Behälter positioniert werden soll, und der Behälter Stirnwände hat, die jeweils der Richtung der einströmenden und ausströmenden Wasserströmung innerhalb des Durchtrittsweges zugewandt sind, und der Behälter ferner mit einem Abstandshalter ausgestattet ist, der von mindestens einer der Stirnwände vorsteht, um den Abstand dieser Stirnwand gegenüber Unregelmässigkeiten im Durchtrittsweg aufrecht zu erhalten.

9. Kapsel (1) nach Anspruch 7 oder 8, dadurch **gekennzeichnet**, dass sich der Arm (14) vom Behälter in einer Richtung wegerstreckt, dass er von der Stirnwand derart vorsteht, um sowohl als Positioniereinrichtung als auch als Abstandshalter zu wirken.

10. Kapsel (1) nach irgendeinem der Ansprüche 5 bis 9, dadurch **gekennzeichnet**, dass der Behälter aus einem Werkstoff besteht, der bei der erwarteten Betriebstemperatur thermisch und die Abmessungen betreffend stabil ist, und ferner derart, dass er im Durchtrittsweg verbleibt, nachdem das Wasserbehandlungsmaterial verteilt worden ist, um weiterhin die Wasserströmung zu beeinflussen, indem es als Leitwand innerhalb des Durchtrittsweges wirkt.

## Revendications

1. Appareil de transfert de chaleur aqueux, cet appareil contenant un système de traitement de l'eau à composants multiples, caractérisé en ce que ledit système inclut au moins un premier composant contenant un matériau de traitement de l'eau fermé sur au moins une face par un premier verre à libération contrôlée étudié pour libérer un matériau de traitement de l'eau dans un temps relativement court suite à l'exposition à l'eau à une température relativement basse et un second composant contenant un matériau de traitement de l'eau fermé sur au moins une face par un second verre à libération contrôlée étudié pour libérer un matériau de traitement de l'eau dans un temps relativement long suite à l'exposition à l'eau à une température relativement plus élevée.

2. Appareil selon la revendication 1, dans lequel l'appareil est un radiateur à eau chaude d'un système de chauffage central.

3. Appareil selon la revendication 1 ou 2, dans lequel le système de traitement de l'eau contient un inhibiteur de corrosion dans les premier et second composants.

4. Appareil selon l'une des revendications 1 à 3, dans lequel le premier composant et le second composant sont incorporés à l'intérieur d'un unique dispositif et forment des compartiments de ce dispositif.

5. Capsule (1) comprenant un conteneur ayant au moins deux compartiments distincts (2, 3), chaque dit compartiment (2, 3) ayant au moins une surface ouverte sur l'extérieur, chaque dite surface étant recouverte par un couvercle, et un moyen de retenue pour retenir chaque couvercle en position afin de former un compartiment étanche, chaque dit couvercle et/ou chaque dit moyen de retenue étant réalisé en un verre à libération contrôlée, caractérisée en ce que le verre à libération contrôlée d'au moins un desdits couvercles et/ou desdits moyens de retenue est un verre qui se dissout dans l'eau à une température qui n'excède pas 30°C en un temps non supérieur à 48 heures, et le reste desdits couvercles et/ou desdits moyens de retenue étant réalisé sinon en un verre qui se dissout dans l'eau en 2 à 50 jours à une température supérieure à 30°C.

6. Capsule (1) selon la revendication 5 pour le traitement de l'eau dans un appareil de transfert de chaleur aqueux, ladite capsule (1) ayant des moyens de positionnement (6, 14) qui sont fixés au conteneur pour positionner fermement la capsule (1) à l'intérieur d'un passage qui forme une partie de l'appareil de transfert de chaleur, dans laquelle chaque couvercle est réalisé en un verre à libération contrôlée et chaque moyen de retenue est un moyen d'étanchéité pour fixer de manière étanche le couvercle à son compartiment respectif.

7. Capsule (1) selon la revendication 6, dans laquelle ledit moyen de positionnement comprend au moins un bras (14) qui est fixé au conteneur, et qui s'étend au loin depuis ce conteneur afin de saisir la surface interne du passage à l'intérieur duquel la capsule est positionnée.

8. Capsule (1) selon l'une quelconque des revendications 5 à 7, dans laquelle le conteneur est de forme générale rectangulaire, en étant plus long suivant la direction de l'axe d'un passage dans lequel il est destiné à être placé, et comporte des parois d'extrémité qui sont respectivement orientées selon la direction d'arrivée et de retrait de l'écoulement d'eau à l'intérieur dudit passage, ledit conteneur étant en outre muni d'un moyen d'espacement qui se projette depuis au moins une desdites parois d'extrémité pour garantir l'espacement de cette paroi d'extrémité vis-à-vis d'irrégularités dans le passage.

9. Capsule (1) selon la revendication 7 ou 8, dans laquelle ledit bras (14) s'étend au loin depuis le conteneur suivant une direction telle qu'il se projette depuis une paroi d'extrémité pour ainsi agir à la fois en tant que moyen de positionnement et tant que moyen d'espacement.

10. Capsule (1) selon l'une quelconque des revendications 5 à 9, dans laquelle le conteneur est réalisé à partir d'un matériau qui est stable thermiquement ainsi que du point de vue de ses dimensions à la température de fonctionnement prévue, et qui est tel qu'il restera dans le passage après que le matériau de traitement de l'eau ait été dispersé afin de continuer à affecter l'écoulement de l'eau en agissant en tant que chicane dans le passage.

*Fig.1*

*Fig.2*

*Fig.3*

FIG.4

FIG.5